# EUROPEAN PATENT SPECIFICATION

(11) **EP 1 803 610 B1**
(45) Date of publication and mention of the grant of the patent: **29.04.2009**
(21) Application number: 06023408.5
(22) Date of filing: 10.11.2006
(51) Int. Cl.: B60R 13/06, B26B 17/00

(54) **Device for producing a detachment tongue on a profile with bi-adhesive layer**
Vorrichtung zur Herstellung einer Grifflasche auf ein Profil mit einem doppelseitigen Klebschicht
Dispositif pour former une languette de préhension sur un profilé avec adhésif double face

(30) Priority: 27.12.2005 IT TO20050909
(43) Date of publication of application: 04.07.2007
(73) Proprietor: EL-SA S.A.S., 10040 Druento TO (IT)
(72) Inventor: Ciro, Nocerino, 10040 Druento (TO) (IT)
(74) Representative: Garavelli, Paolo

(56) References cited:
- CH-A- 232 908
- FR-A- 2 869 257
- US-A1- 2003 101 856

## Description

The present invention refers to device for producing a profile with bi-adhesive layer equipped with a tongue with a detachment of the protecting layer from the bi-adhesive layer itself that is made easier; such profile is known from FR-A-2869257.

As known, in some applications, such as for example in the motor vehicle field, installation of gaskets or in general profiles made of rubber or the like provides that the latter ones are equipped with at least one band of bi-adhesive layer that allows gluing them.

Since generally the production of the profile equipped with the bi-adhesive layer is demanded to a previous production phase with respect to installation, the adhesive surface from the bi-adhesive layer is typically covered by a protecting layer, usually made of nylon. In the installation step of a rubber profile, it is therefore necessary to detach the protecting layer from the bi-adhesive layer in order to proceed with its gluing.

In order to facilitate the detachment of the protecting layer, arrangements are known that allow applying pre-die cut tongues on the end of the protecting layer itself, so that an operator, by pulling the tongue, can easily remove the whole protecting layer in a simple and quick way. These arrangements are however cumbersome from the manufacturing point of view, above all as regards the time factor, since, once the bi-adhesive layer has been applied on the rubber profile, and it is possibly cut at the desired lengths, this latter one must afterwards be taken again in order to take care of applying the pre-die cut tongues thereon.

US-A-2003 101856 describes a manual device according to the preamble of claim 1.

Object of the present invention is providing a manual device for performing the process for producing a tongue with a detachment of the protecting layer of a bi-adhesive layer that is made easier.

The above and other objects and advantages of the invention, as will appear from the following description, are obtained with a device for manually producing a tongue with a detachment of the protecting layer from the bi-adhesive layer that is made easier, as claimed in claim 1.

Preferred embodiments and non-trivial variations of the present invention are the subject matter of the dependent claims.

The present invention will be better described by some preferred embodiments thereof, given as a non-limiting example, with reference to the enclosed drawings, in which:
- FIG. 1 shows a side sectional view of an embodiment of the profile according to the present invention;
- FIG. 2a, 2b and 2c show a side sectional view of a profile in some steps of the process according to the present invention;
- FIG. 3a shows a side view of an embodiment of a manual device for performing the process according to the present invention;
- FIG. 3b shows another side view of the manual device of FIG. 3a; and
- FIG. 3c shows a perspective view of the manual device of FIG. 3a and 3b.

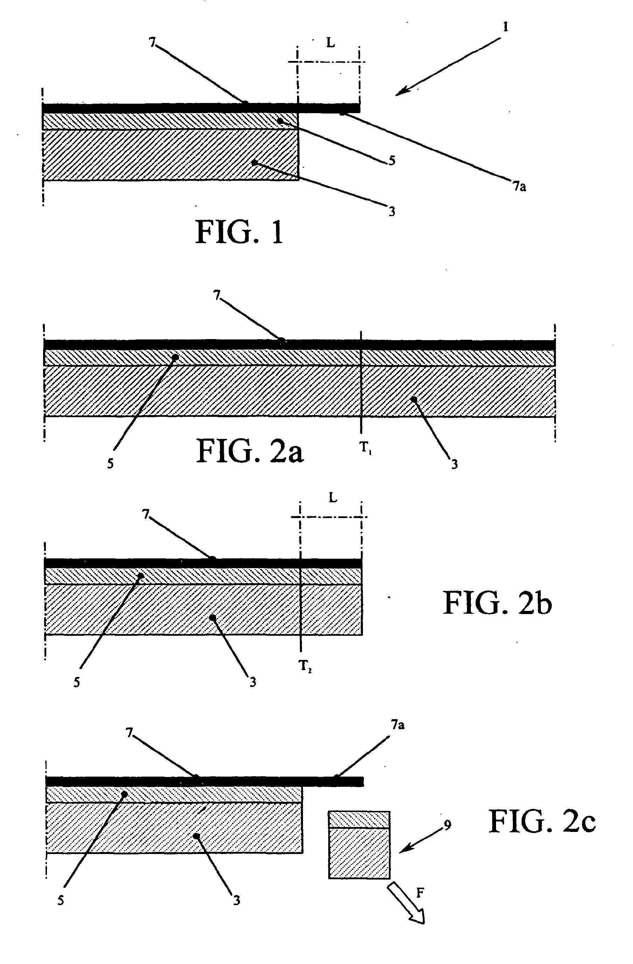

With reference to FIG. 1, it is possible to note that an example of a profile 1 is composed of a gasket profile 3 on which a bi-adhesive layer 5 is applied in a known way, such layer 5 having one of its adhesive surface covered by a protecting layer 7, in which, advantageously, the protecting layer 7 extends by a length L over the edge of the gasket profile 3 and the bi-adhesive layer 5 glued thereon, such length defining a tongue 7a with a detachment of the protecting layer 7 from the bi-adhesive layer 5 itself that is made easier. It is wholly evident that the length L of the tongue 7a must be such as to be enough to allow it to be easily grasped by an operator responsible for removing the protecting layer 7 and for installing the gasket profile 3.

In order to proceed with installing the profile 1, for an operator it is therefore enough to grasp with his hands the tongue 7a and pull it to remove the protecting layer 7 from the bi-adhesive layer 5.

It is clear that the gasket profile 3, in addition to being made of rubber or any other material suitable for the current application, can be produced in any other way; it is also clear that the bi-adhesive layer 5 can be made of any used type, produced for example both by spreading a layer of gluing material, and by placing one or more known bi-adhesive bands. The same protecting layer 7, though it is typically manufactured with nylon, can be any other material suitable for the current application.

With reference now to FIG. 2a, 2b and 2c, it is possible to note that a process for producing the tongue 7a with a detachment of the protecting layer 7 from the bi-adhesive layer 5 that is made easier comprises the steps of:
a) providing a profile 18 composed of a gasket profile 3 on which a bi-adhesive layer 5 is applied, having its adhesive surface covered by a protecting layer 7;
b) if the profile is not of the desired length, cutting T₁ the gasket profile 3, the bi-adhesive layer 5 and the protecting layer 7 (FIG. 2a);
c) cutting T₂ the gasket profile 3 and the bi-adhesive layer 5 at a distance L from the gasket profile 3 edge and the bi-adhesive layer 5 glued thereon (FIG. 2b); and
d) removing F the portion 9 of gasket profile 3 and bi-adhesive layer 5 from the tongue 7a (FIG. 2c).

All or part of the above steps of the above process can be performed both manually and totally or partially automatically.

The present invention refers to a manual device for performing the process according to the present invention. Such manual device is equipped with at least one cutting head comprising a surface for supporting the profile already described previously, on which the detachment tongue according to the present invention has to be produced, and cutting means, preferably made as at least one blade, abutting on the support surface itself; the manual device is further equipped with control means, by operating on which an operator takes the cutting means to approach the support surface down to a distance that is equal to the thickness of the protecting layer of the bi-adhesive layer applied to the profile in such a way that the cutting means cut the gasket layer and the bi-adhesive layer, but not the protecting layer. The support surface is further equipped with end-of-stroke means of the profile that are separate from the cutting means by a distance L adapted to constantly and systematically define the length of the detachment tongue. In order then to produce the profile 1 equipped with the detachment tongue according to the present invention, it is enough to lay the profile on the support surface with the protecting layer in contact with the support surface itself, taking the extreme edge of the profile in contact with end-of-stroke means, to actuate the control means, and to remove from the detachment tongue the portion of gasket profile and bi-adhesive layer that have been cut.

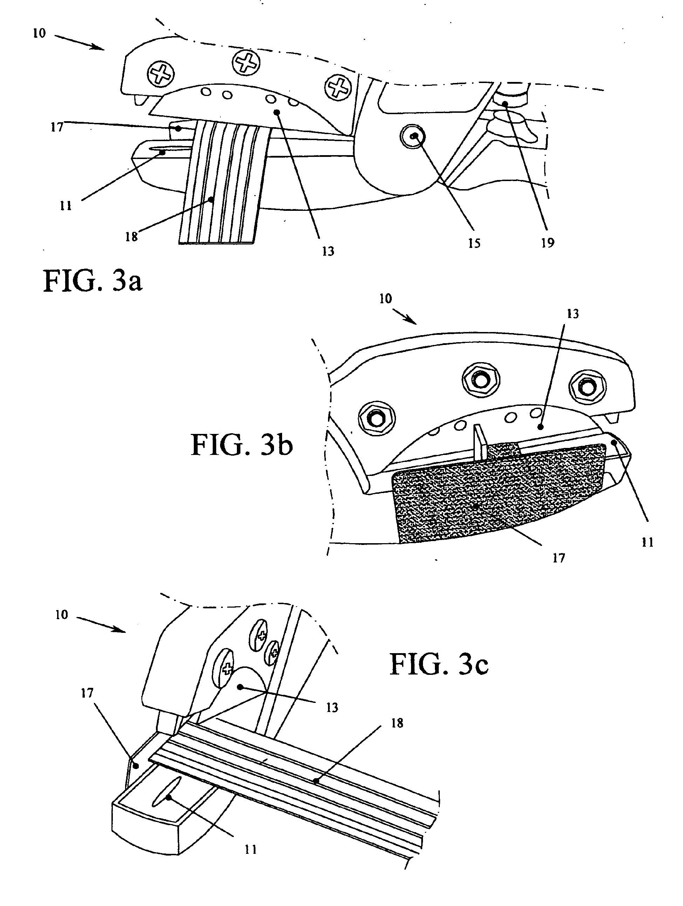

With reference to FIG. 3a, 3b and 3c, it is possible to note that a preferred embodiment of the manual device according to the present invention is preferably shaped as a shear or pair of scissors in which the support surface 11 and the cutting means, realised as a blade 13, of the cutting head 10 are respectively connected to two handles (not shown), hinged in a known way through at least one pin 15, operating as control means, and the end-of-stroke means are realised as at least one small reference square 17. In order to adjust the cuttng depth of the blade 13 in such a way that it approaches the support surface 11 down to a distance equal to the thickness of the protecting layer of the bi-adhesive layer applied to a profile 18, an end-of-stroke adjustment 19 is inserted between the two handles. The end-of-stroke adjustment 19 can actually be made in different ways, for example by using adjusting shims.

An automatic device (not shown) can be provided for performing the above process, comprising at least one cutting head equipped with at least one first blade and one second blade, suitably controlled and actuated in a known way by actuating means, such first blade adapted to exert a sharp cutting of the profile, supplied for example by supplying means and sliding below the cutting head, and such second blade being suitably adjusted to exert the cutting of the gasket layer and the bi-adhesive layer, to thereby form, after the automatic or manual removal of the portion of gasket profile and bi-adhesive layer having been cut, the detachment tongue.

It is clear that the automatic device can be easily inserted inside a production line, for example downstream of an adhesive-applying machine adapted to apply the bi-adhesive layer on the gasket profile.

## Claims

1. Manual device adapted to produce a profile (1) composed of a gasket profile (3) on which at least one bi-adhesive layer (5) is applied, said bi-adhesive layer (5) having an adhesive surface thereof covered by a protecting layer (7), said protecting layer (7) extending by a length L over an edge of said gasket profile (3) and said bi-adhesive layer (5) glued thereon, said length L defining a tongue (7a) for detaching said protecting layer (7) from said bi-adhesive layer (5), said device being equipped with at least one cutting head (10) comprising a support surface (11) of said profile (18) and cutting means abutting on said support surface (11), with control means, whereby, by actuating said control means, said cutting means are taken to approach said support surface down to a distance equal to the thickness of said protecting layer of said bi-adhesive layer applied to said profile, **characterised in that** said support surface (11) is equipped with end-of-stroke means (17) of said profile that are separate from said cutting means by said distance L.

2. Manual device according to claim 1, **characterised in that** said cutting means are at least one blade (13).

3. Manual device according to claim 1, **characterised in that** it is shaped as a shear or pair of scissors in which said support surface (11) and said cutting means of said cutting head (10) are respectively connected to two handles that are mutually hinged through at least one pin (15), said handles realising said control means, and said end-of-stroke means being realised as at least one small reference square (17).

4. Manual device according to claim 3, **characterised in that**, in order to adjust a cutting depth of said cutting means, an end-of-stroke adjustment (19) is inserted between said two handles.

## Patentansprüche

1. Manuelle Vorrichtung für die Herstellung eines Profils (1), die aus einem Dichtungsprofil (3) besteht, auf das mindestens eine Schicht beidseitiges Klebeband (5) aufgeklebt wurde, das genannte beidseitige Klebeband (5) hat eine Klebefläche, die mit einer Schutzschicht bedeckt (7) ist, die genannte Schutzschicht (7) dehnt sich in der Länge L über den Rand des genannten Dichtungsprofils (3) und der genannten Schicht des beidseitigen Klebebandes (5) aus, das auf diesem aufgeklebt ist, die genannte Länge L grenzt eine Zunge (7a) ab, um die genannte Schutzschicht (7) von der genannten Schicht des beidseitigen Klebebandes (5) zu trennen, die genannte Vorrichtung ist mindestens mit einem Schnittkopf (10) ausgestattet, der eine Stützfläche (11) des genannten Profils (18) und Schnittvorrichtungen einschließt, die eine feste Stellung als Steuervorrichtungen auf der genannten Stützfläche (11) einnehmen, daher werden die genannten Schnittvorrichtungen durch die Betätigung der genannten Steuervorrichtungen dazu veranlasst, sich der genannten Stützfläche bis zu einem Abstand gleich der Dicke der genannten Schutzschicht des genannten beidseitigen Klebebandes, das auf dem genannten Profil aufgeklebt ist, zu nähern, welches **dadurch gekennzeichnet ist, dass** die genannte Stützfläche (11) mit Anschlagvorrichtungen (17) des genannten Profils ausgestattet ist, die durch die genannten Schnittvorrichtungen des genannten Abstandes L getrennt werden.

2. Manuelle Vorrichtung gemäß Patentanspruch 1, die **dadurch gekennzeichnet ist, dass** die genannten Schnittvorrichtungen mindestens eine Klinge (13) sind.

3. Manuelle Vorrichtung gemäß Patentanspruch 1, die **dadurch gekennzeichnet ist, dass** sie wie eine Gartenschere oder Schere geformt ist, in der die genannte Stützfläche (11) und die genannten Schnittvorrichtungen des genannten Schnittkopfes (10) entsprechend mit zwei Griffen verbunden sind, die miteinander durch mindestens einen Stift (15) verbunden sind, die genannten Griffe bilden die Steuervorrichtungen, und die genannten Anschlagvorrichtungen sind wie mindestens ein Bezugswinkel (17) realisiert.

4. Manuelle Vorrichtung gemäß Patentanspruch 3, die **dadurch gekennzeichnet ist, dass** zur Regulierung der Schnitttiefe der genannten Schnittvorrichtungen zwischen den genannten beiden Griffen eine Anschlagregulierung (19) eingefügt wurde.

## Revendications

1. Dispositif manuel capable de produire un profil (1) composé d'un profil de joint (3) sur lequel est appliquée au moins une couche bi adhésive (5), une des surfaces bi adhésives de ladite couche (5) étant recouverte d'une couche de protection (7), ladite couche de protection (7) s'étalant d'une longueur L au-delà d'un bord dudit profil de joint (3) et de ladite couche bi adhésive (5) collée sur ce profil, cette longueur L définissant une languette (7a) pour détacher ladite couche de protection (7) de ladite couche bi adhésive (5), ledit dispositif étant encore pourvu d'au moins une tête de coupe (10) comprenant une surface de support (11) dudit profil (18) et des moyens de coupe adossés contre ladite surface de support (11), des moyens de commande, et donc, à travers l'actionnement desdits moyens de commande, lesdits moyens de coupe sont amenés à se s'approcher à ladite surface de support jusqu'à une distance égale à l'épaisseur de ladite couche de protection de ladite couche bi adhésive appliquée sur le profil, **caractérisé en ce que** ladite surface de support (11) est pourvue de moyens de butée de fin de course (17) dudit profil, séparées par lesdits moyens de coupe de ladite distance L.

2. Dispositif manuel selon la revendication 1, **caractérisé en ce que** lesdits moyens de coupe sont au moins une lame (13).

3. Dispositif manuel selon la revendication 1, **caractérisé en ce qu'**il est conformé comme une cisaille ou des ciseaux dans lesquelles ladite surface de support (11) et lesdits moyens de coupe de ladite tête de coupe (10) sont respectivement reliés à deux poignées articulées entre elles au moyen d'un axe (15), lesdites poignées réalisant lesdits moyens de commande, et lesdits moyens de butée étant réalisés comme au moins un équerre de référence (17).

4. Dispositif manuel selon la revendication 3, **caractérisé en ce que,** pour régler une profondeur de coupe desdits moyens de coupe, un réglage de butée de fin de corse est inséré entre lesdites poignées (19).
